# EUROPEAN PATENT APPLICATION

(11) **EP 4 846 831 A1**
(43) Date of publication of application: **02.12.2026**
(21) Application number: 26174020.3
(22) Date of filing: 22.04.2026
(51) Int. Cl.: A01D 34/00, A01D 34/66

(54) **SYSTEMS AND METHODS FOR MONITORING CUTTING PERFORMANCE OF AN AGRICULTURAL MACHINE**

(30) Priority: 28.05.2025 GB 202508276
(71) Applicant: AGCO International GmbH, 8212 Neuhausen am Rheinfall (CH)
(72) Inventor: Hoe, Mads, Randers (DK); Christiansen, Martin Peter, 8930 Randers (DK); Duering Jensen, Kenneth, 8930 Randers (DK)
(74) Representative: AGCO Intellectual Property Department

(57) **Abstract**

Systems and methods are provided for controlling operation of one or more operable components of an agricultural machine operating in a working environment. Sensor data is received from a sensor arrangement operably mounted to the agricultural machine or one or more components thereof (e.g. a mowing unit thereof) and having a sensing region which encompasses a ground surface proximal to the machine. The sensor data is used to determine a measure of a stubble height associated with an area of the working environment worked by the mowing unit. A stubble height metric indicative of a measure of a cutting performance of the mowing unit is determined based on the stubble height measure and is used for controlling operation of one or more components of the agricultural machine.

## Description

### CROSS-REFERENCE TO RELATED APPLICATIONS

Not applicable.

### FIELD

Embodiments of the present disclosure relate generally to agricultural machines, in particular machines comprising a mowing unit operably coupled thereto and associated methods for monitoring a cutting performance thereof.

### BACKGROUND

It is known to mount or otherwise couple implements, and specifically mowing implements to agricultural vehicles such as tractors. Such implements may be front mounted or may be towed by the vehicle. Additionally, some mowing implements are integrated fully with a machine, thereby providing a self-contained and self-propelled mowing apparatus such as a windrower. In either case, there is a need to monitor cutting performance of such mowing implements and units as a measure to monitor crop quality and optionally automate operational adjustments to maximize crop quality and yield.

### BRIEF SUMMARY

According to an aspect of the disclosure there is provided an agricultural machine, comprising: a tractor; a mowing unit operably coupled to the tractor and configured for cutting crop material growing in a working environment; a sensor arrangement operably mounted to the agricultural machine or one or more components thereof and having a sensing region which encompasses a ground surface proximal to the machine; and one or more controllers operably configured to: receive sensor data from the sensor arrangement; analyse the sensor data to determine a measure of a stubble height associated with an area of the working environment worked by the mowing unit; determine, in dependence on the stubble height measure, a stubble height metric indicative of a measure of a cutting performance of the mowing unit; and generate and output a control signal for controlling operation of one or more components of the agricultural machine in dependence on the stubble height metric.

Advantageously, the present solution provides a sensor arrangement mounted to an agricultural machine for assessing, e.g. in real time, the performance of a mowing unit of the agricultural machine in terms of the stubble left following working or processing of growing crop by the mowing unit. Specifically, a stubble height metric is determined based on a stubble height measure which may be comparable across the working environment, or with respect to a base or target metric, for example.

The agricultural machine may comprise a tractor mower combination. That is, the machine may comprise a tractor having a mower (e.g. a single mowing unit) operably coupled to the tractor (e.g. via a hitch point). The mower may be a single mowing unit, or may comprise multiple mowing units. The or each mowing unit may comprise a cutting system.

The sensor arrangement may comprise a sensor unit mounted to the agricultural machine. Where the machine includes a tractor, the sensor unit may be mounted on, e.g. the operator cab of the tractor, and have a sensing region which encompasses a ground surface behind the tractor, in use.

The sensor unit may be mounted on or otherwise be associated with the mowing unit. This may include mounting on a surface thereof and having a sensing region which encompasses a ground surface behind a cutting system of the mowing unit, in use. In embodiments, the sensor unit may be mounted behind a cutting mechanism of the cutting system, with a sensing region which encompasses a ground surface behind the cutting mechanism, in use. This may include mounting the sensor unit to an underside of the mowing unit.

Where the machine comprises multiple mowing units, the sensor arrangement may comprise multiple sensor units. This may include one (or more) sensor units associated with each mowing unit.

The cutting mechanism may comprise, for example, one or more cutting elements which can include knives or discs. The cutting mechanism may comprise a cutter bar, with the one or more cutting elements mounted thereto.

The sensor arrangement may comprise an optical sensor. The optical sensor may comprise a camera, such as a mono camera, for example. This may comprise an RGB camera.

The one or more controllers may be configured to receive optical sensor data from the optical sensor. The one or more controllers may be configured to analyse the optical data for identifying one or more crop components within the optical sensor data. This may include performance of an object recognition process for identifying, e.g. crop stubble, within the optical sensor data. The one or more controllers may be configured for analysing the optical sensor data for determining the stubble height measure. This may be through the application of an object recognition algorithm, identifying a size of objects within the optical sensor data (e.g. pixelwise) with respect to a threshold or base measure of a known size or height within the image data.

In further embodiments, the one or more controllers may be configured to receive additional sensor data from a ground height sensor which may, in use, be used to determine a measure of a distance between the sensor arrangement and the ground surface. This may be utilised by the controller(s) for determining the stubble height measure, e.g. as a calibration metric for the height measure.

In embodiments, the sensor arrangement may comprise a stereocamera. The stereocamera may be configured for obtaining stereo image data from which the one or more controllers may be configured for extracting size or distance information in the sensor data. The one or more controllers may be configured for determining the stubble height measure in dependence on the stereo image data.

In embodiments, the sensor arrangement may comprise a transceiver type sensor. That is, in use the sensor arrangement, or a component thereof e.g. a sensor unit, may be configured for transmitting a measurement signal, with the received reflected measurement signals from one or more objects or components within the sensing region being received at a receiving element thereof. The received reflected measurement signals may be utilised, in use by the controller(s) for determining the stubble height measure therefrom. Example transceiver type sensors may include RADAR, LIDAR, ultrasonic or time-of-flight sensor, for example.

The one or more controllers may be configured to determine the stubble height measure as a difference between the distance between the sensor arrangement and the ground surface and the distance between the sensor arrangement and identified crop stubble within the sensor data.

The stubble height metric may comprise a measure of an average crop stubble height associated with the mowing unit. This may be timewise, for example a moving average to provide a measure of the cutting performance of the mowing unit over time. The average crop stubble height may be determined across the mowing unit, e.g. looking at the transverse distribution of crop stubble height associated with the mowing unit.

The stubble height metric may comprise a measure of a transverse distribution of crop stubble height across the mowing unit. This may include a measure of a difference in crop stubble height between two or more regions of the mowing unit (e.g. left and right side).

The stubble height metric may comprise a measure of a standard deviation of crop stubble height associated with the mowing unit. This may comprise a measure of a standard deviation of crop stubble height across a mowing unit, or across substantially the entire working width of the machine, e.g. where the machine comprises multiple mowing units.

Where the machine comprises multiple mowing units, the one or more controllers may be configured for determining a stubble height metric for each mowing unit. The one or more controllers may be configured to compare determined stubble height metrics for two or more mowing units. The one or more controllers may be configured to control operation of the one or more components in dependence on this comparison.

The stubble height metric may be compared with a control metric to determine control operations for the one or more components. For example, where the stubble height metric comprises an average crop stubble height, the control metric may comprise a threshold crop stubble height or an acceptable range of crop stubble heights outside of which control actions may be taken. For example, where the average crop stubble height is too large, the height of the mowing unit(s) may be reduced. Where the average crop stubble height is too small, the height of the mowing unit(s) may be increased. Where the stubble height metric comprises a standard deviation of crop stubble height, the control metric may comprise a threshold deviation, above which one or more control actions may be initiated, in use.

The one or more controllable components may comprise a user interface of or otherwise associated with the agricultural machine. This may comprise, for example, a user terminal of the agricultural machine. It may comprise a display screen on a mobile user device associated with the machine. The one or more controllers may be configured for communicating, via the user interface, information relating to the determined stubble height metric. This may comprise displaying via the user interface a graphical representation of the determined stubble height metric. This may comprise utilising the user interface for providing a recommended control action, e.g. for one or more operable components of the machine, in dependence on the determined stubble height metric. For example, in some embodiments the controller(s) may be configured to provide a recommendation for raising or lowering a height of the mowing unit(s), or for controlling an operational speed or position of one or more components thereof. The controller(s) may provide, via the user interface, a recommended forward speed for the agricultural machine. In use, an operator of the agricultural machine may subsequently control operation of the machine through interaction with the user interface, e.g. in accordance with the recommended control action.

The one or more controllable components may comprise the mowing unit(s) and/or operational systems thereof.

For example, the one or more controllable components may comprise an actuator for controlling a cutting height of the mowing unit(s). The actuator may comprise, for example, a linear actuator (e.g. a hydraulic, pneumatic or electric) for controlling an operational position of the mowing unit with respect to the ground surface.

The one or more controllable components may comprise a cutting mechanism for the cutting system(s). The one or more controllers may be configured to control an operational speed of the cutting mechanism in dependence on the determined stubble height metric. Where the cutting mechanism comprises a series of blades or cutting discs, the operational speed may comprise a rotational speed. Where the cutting mechanism comprises a cutter bar, the operational speed may relate to an operational frequency of the cutting mechanism.

The one or more controllers may additionally or alternatively be configured to control an operational position of the mowing unit(s) and/or the cutting mechanism thereof. The one or more controllers may be configured to control a pitch, yaw and/or tilt of the mowing unit or the cutting mechanism with respect to the ground surface and/or the crop. This may be effected through control over one or more actuators, as will be appreciated. The one or more controllers may be configured for adjusting a lateral or vertical position of the cutting mechanism in dependence on the determined stubble height metric. This may include increasing or reducing a spacing between the cutting mechanism and the ground surface - i.e. a cutting height for the cutting mechanism - and/or controlling a separation between the cutting mechanism and one or more further operational components of the mowing unit. This may include a distance between the cutting mechanism and a conditioning mechanism, or between the cutting mechanism and a guiding arrangement for controlling the movement and/or placement of cut crop material.

The one or more controllable components may comprise a conditioning mechanism of the mowing unit. The conditioning mechanism may in some embodiments comprise a rotor having multiple conditioning elements operably mounted thereto, such as tines or plates. The one or more controllers may be configured to control an operational speed, e.g. a rotational speed, of the rotor for adjusting a level of conditioning applied to cut crop material by the conditioning mechanism, in use. The one or more controllers may be configured for adjusting an operational position of the conditioning mechanism, e.g. to adjust a size or shape of a crop flow path about the conditioning elements of the conditioning mechanism. This may include a distance between the conditioning mechanism and a guiding arrangement for controlling the movement and/or placement of cut crop material. Again, this may be done for controlling a level of conditioning applied thereby to the crop material.
**[Inventors - Please can you list here how each of these control actions affects the mowing quality, and what we can infer from the stubble metric which might prompt these actions? I have tried to give some examples, but they may not be appropriate or correct]**

According to a further aspect of the disclosure, there is provided a control system for controlling operation of one or more operable components of an agricultural machine operating in a working environment, the control system comprising one or more controllers collectively configured to: receive sensor data from a sensor arrangement operably mounted to the agricultural machine or one or more components thereof and having a sensing region which encompasses a ground surface proximal to the machine; analyse the sensor data to determine a measure of a stubble height associated with an area of the working environment worked by a mowing unit of the agricultural machine; determine, in dependence on the stubble height measure, a stubble height metric indicative of a measure of a cutting performance of the mowing unit; and generate and output a control signal for controlling operation of one or more components of the agricultural machine in dependence on the stubble height metric.

The one or more controllers may collectively comprise an input (e.g. an electronic input) for receiving one or more input signals. The one or more input signals may comprise the sensor data from the sensor arrangement. The one or more controllers may collectively comprise one or more processors (e.g. electronic processors) operable to execute computer readable instructions for controlling operation of the control system, for example, to analyse the sensor data to determine the measure of a stubble height and/or determine the stubble height metric. The one or more processors may be operable to generate one or more control signals for controlling operation of the one or more operational components. The one or more controllers may collectively comprise an output (e.g. an electronic output) for outputting the one or more control signals.

The one or more controllers may be configured in the same way as the one or more controllers of the agricultural machine of the preceding aspect(s) of the present disclosure.

A further aspect provides a method for controlling operation of one or more operable components of an agricultural machine operating in a working environment, the method comprising: receiving sensor data from a sensor arrangement operably mounted to the agricultural machine or one or more components thereof and having a sensing region which encompasses a ground surface proximal to the machine; analysing the sensor data to determine a measure of a stubble height associated with an area of the working environment worked by a mowing unit of the agricultural machine; determining, in dependence on the stubble height measure, a stubble height metric indicative of a measure of a cutting performance of the mowing unit; and controlling operation of one or more components of the agricultural machine in dependence on the stubble height metric.

The method may comprise performance of the operational steps for which the one or more controllers of any of the preceding aspects of the disclosure are configured.

A yet further aspect provides computer software which, when executed by one or more processors, causes performance of the method of the preceding aspect of the disclosure.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a simplified top down view illustrating an agricultural machine embodying aspects of the present disclosure;
FIG. 2 is a simplified side cross-sectional view of a mowing unit forming part of the agricultural machine of FIG. 1; and
FIG. 3 is a schematic view of a control system of the present disclosure.

### DETAILED DESCRIPTION

The figures illustrate embodiments of the present disclosure, which provides an agricultural machine here in the form of a tractor mower combination 2 comprising a tractor 4 which includes multiple mowing units 6, 8, 10 operably mounted thereto. It will be appreciated here that alternative embodiments may include different numbers of mowing units, e.g. a single mowing unit. The mowing units 6, 8, 10 are configured for cutting crop material C growing in a working environment. A sensor arrangement, here comprising a camera 20, is operably mounted to the agricultural machine or one or more components thereof, specifically here an underside of a frame 30 of the mowing unit 8 and having a sensing region which encompasses a ground surface proximal to the machine, here in the region behind a cutting system 38 of the mowing unit 8. Sensor data from the camera 20 is used to determine a measure of a stubble height associated with an area of the working environment worked by the mowing unit 8. A stubble height metric indicative of a measure of a cutting performance of the mowing unit is determined from the stubble height measure, which is used to control operation of one or more components (e.g. a user interface 31 of the tractor 4, or operational components of the mowing units 6, 8, 10, etc.) of the agricultural machine 2 as is discussed in detail herein.

### Agricultural Machine

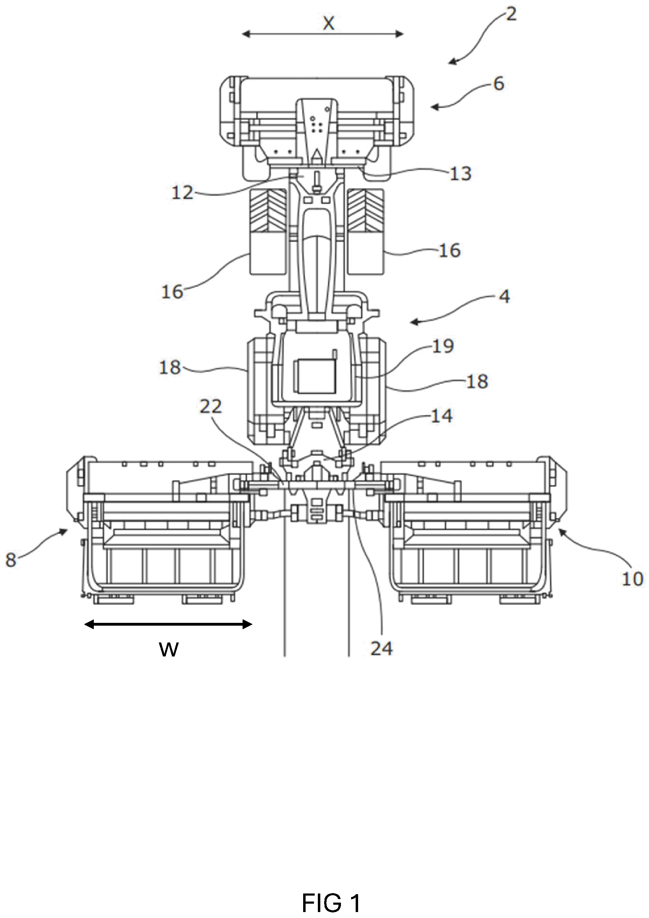

FIG. 1 is a schematic top down view of an agricultural machine 2 in the form of a tractor mower combination formed of a tractor 4, and an implement in the form of a front mowing unit 6. In the illustrated embodiment, tractor 4 comprises front and rear wheels 16, 18, any or all of which may be steerable as will be appreciated, along with an operator cab 19. The machine 2 forms a "butterfly-mower" arrangement which additionally includes first and second rear mowing units 8, 10. The front mowing unit 6 is operably coupled at a front hitch 12 of the tractor 4 and is moveable under the operation of an actuator mechanism 13. The first and second rear mowing units 8, 10 are operably coupled to a rear hitch 14 of the tractor 4 by respective mounting mechanisms 22, 24. The mounting mechanisms 22, 24 may be configured to allow the rear mowing units 8, 10 to be folded between operating (e.g. as shown in FIG 1) and a storage position - e.g. folded upwardly and inwards for transport and/or storage of the machine 2. Mounting mechanisms 22, 24 may additionally be configured for adjusting an operational position of the respective mowing units 8, 10, for example through control over the vertical height, horizontal position and/or pitch, yaw or tilt of the mowing units 8, 10. The mounting mechanisms 22, 24 may comprise suitably configured actuators for this purpose, as will be appreciated. As shown in FIG 1, in an operating position, first and second rear mowing units 8, 10 are positioned such that they are laterally spaced either side of a longitudinal axis of the tractor 4. At least the rear mowing units 8, 10 may be powered by a suitable mechanical coupling with a power take off shaft of the tractor 4 (not shown).

Whilst shown here in a "butterfly mower" arrangement, it will be appreciated that the disclosure is not limited in this sense, and the machine may be formed of a tractor with a single mowing unit, e.g. mowing unit 8, or may be a self-propelled mower / windrower having an integrated mowing unit.

### Mowing Unit

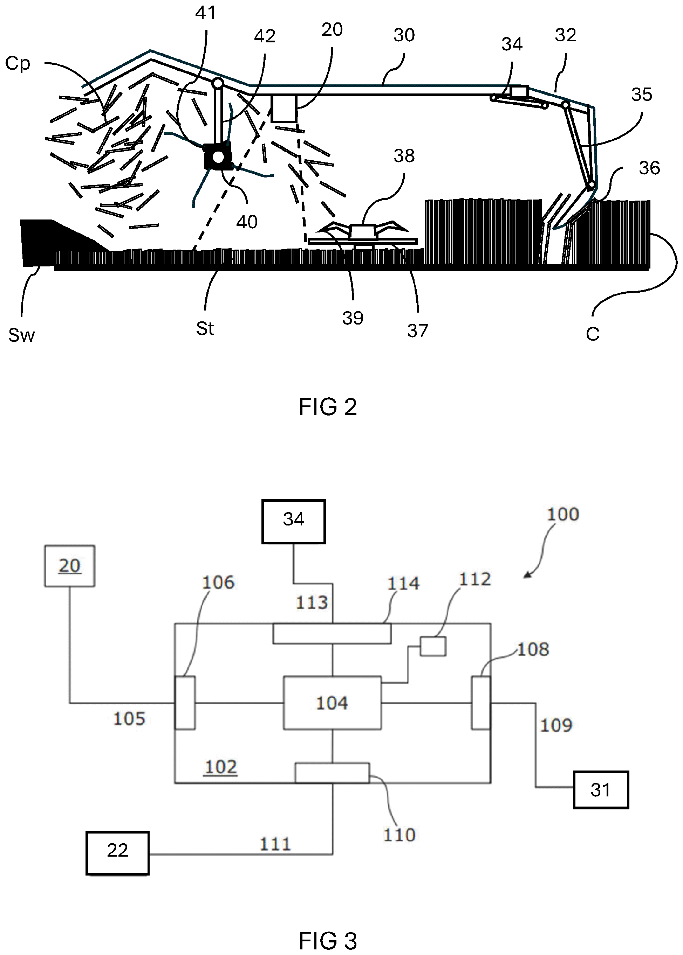

FIG. 2 illustrates an example mowing unit, here mowing unit 8, in more detail. The mowing unit 8 is formed of a frame 30 having a moveable curtain 32 arranged at a foremost section of the mowing unit 8, in a direction of motion, in use. The curtain 32 is moveable in a substantially horizontal direction with respect to the frame 30 under operation of a linear actuator 34 (which could be pneumatic, hydraulic or electric, as desired). The curtain 32 additionally includes and end section 36 connected to and moveable with respect to the remainder of the curtain 32. This movement may be manual, e.g. under impact with other objects such as crop material, but in the illustrated embodiment a further linear actuator 35 is provided for controlling this movement.

The mowing unit 8 additionally includes a cutting system here in the form of a series of rotary cutter discs 38 operably mounted to a cutter bar 37. Only a single cutter disc is displayed here for simplicity, however the skilled reader will understand how a series of cutter discs may be provided across a working width of the mowing unit 8, each of which being rotatable about substantially vertical axes defined by a central hub of the cutter discs 38. Such an arrangement is conventional in the technical field. The cutter discs 38 comprise a series of cutting elements 39 providing a working surface thereof for cutting crop material, in use.

The illustrated mowing unit 8 also incorporates a conditioning unit 40 here formed as a tine conditioner 40 having a rotor supported on the frame 30 of the mowing unit and having a series of tines 41 moveable in a circular path upon rotation of the rotor about a central axis. Again, such an arrangement is common in the field. The conditioning unit 40 of the illustrated embodiment is moveable in a substantially vertical direction under the action of a linear actuator 42. Movement of the conditioning unit 40 under the operation of the actuator 42 is used to adjust a conditioning path for cut crop material Cp between the tines 41 and the frame 30. As will be appreciated, adjustment of this conditioning path may advantageously adjust a level of conditioning applied to the cut crop material Cp, in use.

Cut (and optionally conditioned) crop material may be subsequently formed into a swath Sw left on the ground behind the machine 2, in use. The swath Sw may be collected and/or processed further through performance of one or more agricultural operations, as will be appreciated. The mowing unit 8 may include one or more guiding surfaces downstream of the conditioning unit 40 for controlling the placement of the swath Sw on the ground surface.

The operation of these components of the mowing unit 8 and more widely the agricultural machine 2 can be controlled in dependence on a stubble height metric as discussed herein.

The mowing unit 8 is additionally provided with a sensor arrangement here in the form of a camera 20 operably mounted to the frame 30 of the mowing unit. The camera 20 has a sensing region which encompasses a ground surface behind the cutter discs 38 (illustrated by the dotted lines in FIG. 2). In this embodiment, image data from the camera 20 is analysed (see below for a detailed discussion thereof) for determining a measure of a stubble height for crop stubble St left following a cutting operation by the cutting system. As discussed herein, this is then used to determine a stubble height metric used for control over one or more controllable components of the agricultural machine 2.

### Control System

FIG 3 illustrates the control system 100. As shown, control system 100 comprises a controller 102 having an electronic processor 104, an electronic input 106 and electronic outputs 108, 110, 114. The processor 104 is operable to access a memory 112 of the controller 102 and execute instructions stored therein to perform the steps and functionality of the present disclosure discussed herein, e.g. by determining the stubble height measure and the stubble height metric therefrom, and for controlling operation of the one or more controllable components of the machine 2.

The processor 104 is operable to receive sensor data via input 106 which, in the illustrated embodiment, takes the form of input signals 105 received from the camera 20. As discussed in detail hereinbelow, utilising this data, the processor 104 is configured to analyse the data and determine therefrom a measure of a stubble height associated with crop stubble St left following a cutting operation by the cutting system of the mowing unit 8. The processor 104 then utilises stubble height measure determined from the sensor data to determine a stubble height metric indicative of a measure of a cutting performance of the mowing unit 8.

Depending on the determined stubble height metric, one or more control actions are determined for operational components of the machine 2, e.g. of the tractor 4 or the mowing unit 8 itself, including the curtain 32, cutting system 38 or the conditioning unit 40.

Specifically, output 108 is operably coupled to a user interface here in the form of a display terminal 31 associated with the tractor 4, e.g. a display terminal provided in an operator cab 19 of the tractor 4. The control system 100 is operable to control or inform operation of the display terminal 31, in the illustrated embodiment through output of control signals 109 via output 108 for receipt at a local control unit of the display terminal 31 for controlling operation thereof for presenting to an operator of the tractor a graphical representation of the stubble height metric. The graphical representation may be for information purposes only, and the operator may in turn decide themselves appropriate control actions to be taken in dependence on the information presented by the terminal 31. Alternatively, the display terminal 31 may be utilised to suggest control actions for the operation of the machine 2 based on the determined stubble height metric.

FIG 3 additionally illustrates a further feature of embodiments of the control system 100, and a variant of the present disclosure. Specifically, controller 102 includes an electronic output 110 which is operably coupled to the mounting mechanism 22 for controlling an operational position of the mowing unit 8, e.g. via a local control unit for the mounting mechanism 22. The control system 100 is operable to control or inform operation of the mechanism, or one or more actuators thereof, in the illustrated embodiment through output of control signals 111 via output 110 for receipt at a local control unit of the mounting mechanism 22 for controlling operation thereof for raising or lowering the position (i.e. the height) of the mowing unit 8 with respect to the ground surface. Advantageously, the stubble height metric may be used to determine whether the mowing unit 8 is cutting at a desired height for the agricultural operation, and suitable height control for the mowing unit 8 may be automated accordingly. In yet further use cases, a lateral position of the mowing unit 8 may be adjusted, or indeed a pitch, title or roll of the mowing unit 8 may be adjusted, e.g. where the stubble height metric is indicative of an uneven cutting performance across a working width W of the mowing unit 8.

FIG 3 additionally illustrates yet a further feature of embodiments of the control system 100, and a variant of the present disclosure. Specifically, controller 102 includes an electronic output 114 which is operably coupled to linear actuator 34 for controlling an operational position of the curtain 32 e.g. via a local control unit for the actuator 34. The control system 100 is operable to control or inform operation of the actuator 34 in the illustrated embodiment through output of control signals 113 via output 114 for receipt at a local control unit of the actuator 34 for controlling operation thereof for adjusting a position of the curtain 32 of the mowing unit 8, thereby controlling a separation between the curtain 32 and the cutting system 38. Advantageously, the positioning of the curtain 32 can be adjusted for controlling the interaction between the growing crop C and the cutting system 38. In some instances, for example, for given crop heights it may be more beneficial to increase or reduce the curtain-cutter system separation to ensure an even or uniform "feed" of crop material onto the cutting system 38 and the cutting elements 39 thereof. Rather than measuring crop height directly, a turbulent or non-uniform feed of crop material onto the cutting system 38 may be inferred from a stubble height pattern observed by camera 20. The present disclosure hereby advantageously provides a system which can automate control over the curtain - cutting system separation to assist an operator.

In an extension, control system 100 may be further configured to control linear actuator 42 for controlling a vertical position of the conditioning unit 40 as discussed herein, e.g. via a local control unit for the actuator 42. The control system 100 is operable to control or inform operation of the actuator 42 for raising or lowering the position of the conditioning unit 40 with respect to the ground surface. In turn, this may adjust the size of a conditioning channel or path as discussed herein, for adjusting a level of conditioning applied to the cut crop material Cp. Advantageously, the stubble height metric may indirectly indicate an expected size or condition of the cut crop material and in turn a conditioning requirement of that cut crop material Cp. In this way, a level of conditioning applied to the crop material can be controlled in dependence on an observed or determined stubble height metric.

In a further extension of the illustrated embodiments, control system 100 may be further configured to control an operational speed of one or more components of the mowing unit 8 in dependence on the determined stubble height metric. This can include an operational e.g. rotational, speed of the blades of the cutting system 38. For instance, an uneven stubble may be indicative of a too low (or too high) cutting speed of the cutting system 38, which may be controlled accordingly. The control system 100 may control a rotational speed of the rotor of the conditioning unit 40 in dependence on the stubble height metric. As discussed above, the stubble height metric may indirectly indicate an expected size or condition of the cut crop material and in turn a conditioning requirement of that cut crop material Cp. In this way, a level of conditioning applied to the crop material can be controlled in dependence on an observed or determined stubble height metric by controlling a rotational speed of the conditioning unit 40. As will be appreciated, the operational speed of the components of the mowing unit 8 may be controllable through suitable control over a speed or operation of the power take off shaft of the tractor 4.

In yet a further extension of the illustrated embodiments, the control system 100 may be further configured to control a forward speed of the tractor 4 in dependence on the determined stubble height metric. For instance, an uneven stubble may be indicative of a too low (or too high) forward speed of the tractor 4, which may be controlled accordingly.

### Stubble Height Metric Determination

The process begins with collection and receipt of sensor data by the sensor arrangement. In the illustrated embodiments this comprises the collection of optical sensor data from the camera 20. The optical data is analysed to identify one or more crop components, specifically here crop stubble within the optical sensor data through performance of an object recognition process. Once identified, a stubble height measure is determined for those components, identifying a size of objects within the optical sensor data (e.g. pixelwise) with respect to a threshold or base measure of a known size or height within the image data. The field of view of the camera 20 along with knowledge of the mower unit's height and/or direct measure of a distance between the camera 20 and the ground surface or stubble may be used in the calculation of stubble height / size in the optical sensor data. For instance, a stubble height measure may be determined as a difference between the distance between the sensor arrangement and the ground surface and the distance between the sensor arrangement and identified crop stubble within the sensor data or the size of identified crop stubble components within the data.

Utilising the stubble height measure a stubble height metric is determined. The metric provides a means to measure a comparable metric across multiple points in a working environment, or over time as the machine 2 performs an agricultural operation for automating said process or adjustment of that operation on the go.

In some instances, the stubble height metric comprises a measure of an average crop stubble height associated with the mowing unit 8. This may be timewise, for example a moving average to provide a measure of the cutting performance of the mowing unit 8 over time - i.e. is the mowing unit 8 providing a consistent cut across the field for a given set of operational parameters.

Additionally or alternatively, an average crop stubble height may be determined across the mowing unit 8, e.g. looking at the transverse distribution of crop stubble height associated with the mowing unit 8. Where this is uneven e.g. greater on one side of the cutting unit compared with the other this may suggest that an adjustment may be required to the tilt or roll of the mowing unit 8 for achieving a more uniform cut. A transverse distribution of crop stubble height across the mowing unit 8 may include a measure of a difference in crop stubble height between two or more regions of the mowing unit (e.g. left and right side), for example.

An alternative stubble height metric may include a measure of a standard deviation of crop stubble height associated with the mowing unit 8. This may comprise a measure of a standard deviation of crop stubble height across a mowing unit 8, or across substantially the entire working width of the machine 2, e.g. where the machine comprises multiple mowing units 6, 8, 10. A large standard deviation may be indicative of an unevenness of stubble height across a working width of the mowing unit 8 / machine 2, and hence indicate either the need to adjust operation thereof, e.g. in the manner discussed herein, or indeed the need for one or more maintenance actions to be performed. This can include replacement or sharpening of cutting elements, e.g. discs 39 of the cutting unit 38 of the mowing unit 8.

In use, the stubble height metric may be compared with a control metric to determine control operations for the one or more components. For example, where the stubble height metric comprises an average crop stubble height, the control metric may comprise a threshold crop stubble height or an acceptable range of crop stubble heights outside of which control actions may be taken. For example, where the average crop stubble height is too large, the height of the mowing unit(s) may be reduced. Where the average crop stubble height is too small, the height of the mowing unit(s) may be increased. Where the stubble height metric comprises a standard deviation of crop stubble height, the control metric may comprise a threshold deviation, above which one or more control actions may be initiated, in use. This may advantageously provide an acceptable operator experience through suitable selection of such thresholds or ranges, preventing over correction or multiple adjustments of the controlled components in a relatively short period of time.

### Further Alternative Embodiments

The camera 20 is provided as an example sensor unit, and the skilled person will appreciate that other sensor types may be utilised here. A stereocamera may be advantageously used, with stereo image data providing size or distance information in the sensor data which can be used, e.g. by the controller 102 for determining the stubble height measure. Alternatively, camera 20 may instead comprise a transceiver type sensor with received reflected measurement signals utilised, in use by the controller(s) 102 for determining the stubble height measure therefrom. Example transceiver type sensors may include RADAR, LIDAR, ultrasonic or time-of-flight sensor, for example.

The system may also be provided with a further sensor arrangement which can incorporate a ground height sensor. This may be used to determine a direct measure of a distance between the sensor arrangement and the ground surface. In the illustrated embodiments, this may be utilised by the controller(s) 102 as a calibration metric for the height measure, e.g. to understand the distance between the camera 20 and the ground surface and/or the stubble and hence an expected size for crop components in the image data and how this relates to a given stubble height.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. An agricultural machine, comprising:
a tractor;
a mowing unit operably coupled to the tractor and configured for cutting crop material growing in a working environment;
a sensor arrangement operably mounted to the agricultural machine or one or more components thereof and having a sensing region which encompasses a ground surface proximal to the machine; and
one or more controllers operably configured to:
receive sensor data from the sensor arrangement;
analyse the sensor data to determine a measure of a stubble height associated with an area of the working environment worked by the mowing unit;
determine, in dependence on the stubble height measure, a stubble height metric indicative of a measure of a cutting performance of the mowing unit, wherein the stubble height metric comprises a measure of an average crop stubble height associated with the mowing unit; and
generate and output a control signal for controlling operation of one or more components of the agricultural machine in dependence on the stubble height metric.

2. An agricultural machine as claimed in claim 1, wherein the sensor unit is mounted on or otherwise be associated with the mowing unit.

3. An agricultural machine as claimed in claim 1 or claim 2, wherein the sensor arrangement comprises an optical sensor.

4. An agricultural machine as claimed in claim 3, wherein the one or more controllers are configured to:
receive optical sensor data from the optical sensor; and
analyse the optical data for identifying one or more crop components within the optical sensor data, through performance of an object recognition process for determining the stubble height measure;
wherein the one or more controllers are configured to apply an object recognition algorithm to the received optical sensor data for identifying a size of objects within the optical sensor data with respect to a threshold or base measure of a known size or height within the image data.

5. An agricultural machine as claimed in any preceding claim, wherein the one or more controllers are configured to receive additional sensor data from a ground height sensor which, in use, is used to determine a measure of a distance between the sensor arrangement and the ground surface; and wherein the one or more controllers are configured to utilise the additional sensor data for determining the stubble height measure.

6. An agricultural machine of any preceding claim, wherein the one or more controllers are configured to determine the stubble height measure as a difference between the distance between the sensor arrangement and the ground surface and the distance between the sensor arrangement and identified crop stubble within the sensor data.

7. An agricultural machine as claimed in any preceding claim, wherein the average crop stubble height is determined, in use, either:
timewise to provide a measure of the cutting performance of the mowing unit over time; or
across the mowing unit providing a measure of the transverse distribution of crop stubble height associated with the mowing unit.

8. An agricultural machine of any preceding claim, wherein the stubble height metric comprises a measure of a standard deviation of crop stubble height associated with the mowing unit.

9. An agricultural machine as claimed in claim 11, wherein the measure of the standard deviation of the crop stubble height comprises:
a measure of a standard deviation of crop stubble height across a mowing unit; or
a measure of a standard deviation of crop stubble height across substantially the entire working width of the machine.

10. An agricultural machine of any preceding claim, wherein the one or more controllable components comprise a user interface of or otherwise associated with the agricultural machine; and wherein the one or more controllers are configured for communicating, via the user interface, information relating to the determined stubble height metric.

11. An agricultural machine of any preceding claim, wherein the one or more controllable components comprise the mowing unit(s) and/or operational systems thereof; optionally wherein the one or more controllable components comprise a cutting mechanism for the mowing unit(s); and wherein the one or more controllers are configured to control an operational speed of the cutting mechanism in dependence on the determined stubble height metric.

12. An agricultural machine of claim 11, wherein the one or more controllable components comprise a cutting mechanism for the mowing unit(s); and wherein the one or more controllers are configured to control an operational position of the cutting mechanism in dependence on the determined stubble height metric; optionally wherein the one or more controllers are configured to:
adjust a lateral or vertical position of the cutting mechanism in dependence on the determined stubble height metric; and/or
control a spacing between the cutting mechanism and the ground surface and/or a separation between the cutting mechanism and one or more further operational components of the mowing unit in dependence on the stubble height metric.

13. An agricultural machine of any preceding claim, wherein the one or more controllable components comprise a conditioning mechanism of the mowing unit; and wherein the one or more controllers are configured to control an operational speed and/or an operational position of the conditioning mechanism in dependence on the determined crop stubble metric.

14. A control system for controlling operation of one or more operable components of an agricultural machine operating in a working environment, the control system comprising one or more controllers collectively configured to:
receive sensor data from a sensor arrangement operably mounted to the agricultural machine or one or more components thereof and having a sensing region which encompasses a ground surface proximal to the machine;
analyse the sensor data to determine a measure of a stubble height associated with an area of the working environment worked by a mowing unit of the agricultural machine;
determine, in dependence on the stubble height measure, a stubble height metric indicative of a measure of a cutting performance of the mowing unit, wherein the stubble height metric comprises a measure of an average crop stubble height associated with the mowing unit; and
generate and output a control signal for controlling operation of one or more components of the agricultural machine in dependence on the stubble height metric.

15. A method for controlling operation of one or more operable components of an agricultural machine operating in a working environment, the method comprising:
receiving sensor data from a sensor arrangement operably mounted to the agricultural machine or one or more components thereof and having a sensing region which encompasses a ground surface proximal to the machine;
analysing the sensor data to determine a measure of a stubble height associated with an area of the working environment worked by a mowing unit of the agricultural machine;
determining, in dependence on the stubble height measure, a stubble height metric indicative of a measure of a cutting performance of the mowing unit, wherein the stubble height metric comprises a measure of an average crop stubble height associated with the mowing unit; and
controlling operation of one or more components of the agricultural machine in dependence on the stubble height metric.
